# EUROPÄISCHE PATENTSCHRIFT

(11) **EP 0 807 384 B1**
(45) Veröffentlichungstag und Bekanntmachung des Hinweises auf die Patenterteilung: **03.11.1999**
(21) Anmeldenummer: 96107645.2
(22) Anmeldetag: 14.05.1996
(51) Int. Cl.: A22C 21/00, F16H 7/06

(54) **Einrichtung zur Bearbeitung von Geflügelkörpern**
Device for the treatment of the body of slaughtered poultry
Dispositif pour le traitement du corps de volailles abattues

(43) Veröffentlichungstag der Anmeldung: 19.11.1997
(73) Patentinhaber: NORDISCHER MASCHINENBAU RUD. BAADER GMBH + CO KG, 23560 Lübeck (DE)
(72) Erfinder: Wruck, Siegbert, 18435 Stralsund (DE); Wagner, Wolfgang, 23858 Reinfeld (DE)
(74) Vertreter: Schaller, Hans-Jörg

(56) Entgegenhaltungen:
- EP-A- 0 439 780
- EP-A- 0 519 570
- US-A- 2 791 911
- US-A- 3 979 793
- US-A- 4 896 399
- US-A- 5 346 427
- PRODUCT ENGINEERING, Bd. 36, 18.Januar 1965, XP002020647 "SELF-LUBRICATING CHAINS"

## Beschreibung

Die Erfindung betrifft eine Einrichtung zur Bearbeitung von Geflügelkörpern zum Zwecke der Herstellung verzehrgerechter Produkte mit einem angetriebenen, Umlenkungen und lineare Trumteile aufweisenden und mit Haltemitteln für die hängende Halterung der Geflügelkörper versehenen Hauptförderer, umfassend eine Laschenkette, deren Kettenglieder jeweils aus Doppellaschen bestehen und jeweils mit benachbarten Kettengliedern mittels das Teilungsmaß bestimmenden Gelenken zu einem Endlosförderer verbunden sind, wobei die Haltemittel längs einem Förderpfad bewegt werden, der den Wirkbereich mindestens eines Bearbeitungswerkzeuges mit Hilfsförderer durchläuft, dessen Antrieb mittels eines mit dem Hauptförderer wirkverbundenen Getriebes erfolgt, wobei das betriebe zum Antrieb des Hilfsförderers ein mit einem liearen Trumteil der laschenkette des Hauptförderers kämmen des Zahnrad umfaßt. Eine solche Einrichtung ist aus US-A-5346 427 bekannt.

Bei derartigen Einrichtungen finden als Förderer insbesondere aus Gründen der hohen Querbelastbarkeit und des vergleichsweise geringen Kostenaufwandes bevorzugt schwere Laschenkette mit relativ großem Teilungsmaß Verwendung, die um Umlenkräder mit senkrechten Achsen als Endlosförderer geführt sind und lineare Trumteile von zehn und mehr Metern Länge aufweisen können. An solchen Laschenketten sind Haltemittel beispielsweise Schäkel zur Aufnahme der zu bearbeitenden Geflügelkörper angeordnet, die damit längs eines Förderpfades vorbewegt werden, der den Wirkbereich einer Reihe von Bearbeitungswerkzeugen durchläuft.

Je nach Art der vorgesehenen Bearbeitung ist es erforderlich, den Geflügelkörper während der Bearbeitung zusätzlich fördernd zu unterstützen, was üblicherweise durch einen synchron mit dem Hauptförderer angetriebenen Hilfsförderer geschieht.

Dabei kommt es darauf an, daß der Hilfsförderer gleichförmig bewegt wird und eine Taktung etwa an diesem vorgesehener Mitnehmer im Verhältnis zu den Haltemitteln des Hauptförderers nach einmaliger Einstellung erhalten bleibt, auch wenn dieser bezüglich seiner Fördergeschwindigkeit regelbar ist.

Der Antrieb des Hilfsförderers kann wie aus dem US-Patent 4 896 399 entnehmbar, autark oder durch eine geeignete Getriebeverbindung zwischen dem Hilfsförderer und dem Hauptförderer erfolgen, wobei die Herleitung des Drehmomentes in der Regel durch Verbindung mit der Achse eines Umlenkrades erfolgt.

Bei Bearbeitungswerkzeugen im Bereich der linearen Trumteile des Hauptförderers ist dies aufgrund der zu überbrückenden Entfernung aufwendig, so daß der Erfindung die Aufgabe zugrundeliegt, eine Getriebeanordnung vorzuschlagen, die ermöglicht, den Antrieb eines Hilfsförderers auf kurzem Wege von dem Hauptförderer abzugreifen und dabei eine gleichförmige und synchrone Bewegung auf den bzw. die Hilfsförderer zu übertragen.

Diese Aufgabe wird erfindungsgemäß dadurch gelöst, daß jedes Kettenglied einen zwischen den Gelenken angeordneten und mindestens einer Lasche zugeordneten und das Teilungsmaß halbierenden Mitnehmer aufweist, und daß das Zahnrad des Getriebes mit den Gelenken und den Mitnehmern in Eingriff steht.

Die mit dieser Ausführung erzielbaren Vorteile bestehen neben der mechanischen Vereinfachung in einer erheblichen Reduzierung des elektrischen Installationsaufwandes, was sich insbesondere bei üblichen Einrichtungen mit mehreren Bearbeitungswerkzeugen mit Hilfsförderer kostengünstig auswirkt.

Weitere vorteilhafte Ausführungsmerkmale sind den Unteransprüchen zu entnehmen.

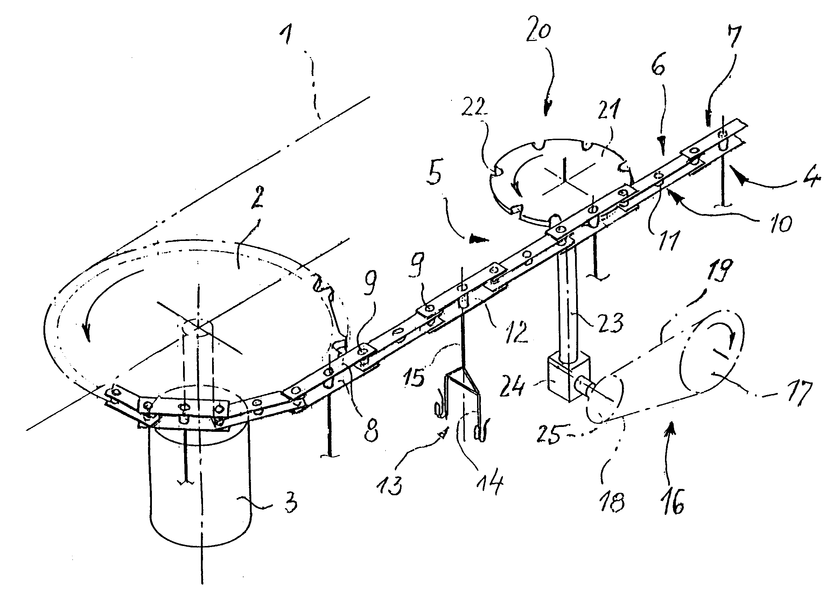

Die Erfindung wird nachstehend anhand eines in der Zeichnung dargestellten Ausführungsbeispiels naher erläutert.

Die einzige Figur zeigt einen Ausschnitt aus einer Bearbeitungsanlage für Geflügelkörper, einer sogenannten 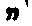 Cut up - Linie", bei der die Geflügelkörper an den Beinen hängend gefördert werden. Die Förderung erfolgt durch einen Hauptförderer 1 , der in einem nicht gezeigten Anlagegestell installiert ist und mindestens zwei Umlenkräder 2 aufweist, von denen lediglich ein durch einen Getriebemotor 3 angetriebenes gezeigt ist. Die Umlenkräder 2 führen eine endlose Laschenketten 4 in einer horizontalen Umlaufebene und bilden dabei lineare Trumteile 5 . Die Kettenglieder 6 und 7 der Laschenkette 5 bestehen jeweils aus distanziert zueinander angebrachten Doppellaschen 8 , wobei jeweils benachbarte Kettenglieder über Gelenke 9 miteinander verbunden sind, die in bekannter und daher nicht gezeigter Weise aus Bolzen und drehfähiger Hülse gebildet sein können. In der Mitte zwischen den Gelenken 9 jedes zweiten Kettengliedes 6 ist ein Mitnehmer 10 in Form eines an den beiden einander gegenüberliegenden Laschen befestigten Rundbolzens 11 angeordnet, der in gleicher Weise wie bei den Gelenken 9 mit einer drehfähigen Hülse umgeben sein kann. Die jeweils an den Kettengliedern 6 angelenkten Kettenglieder 7 sind in der Mitte zwischen den Gelenken 9 mit einer Distanzhülse 12 versehen, in der ein Haltemittel 13 in Form eines einen Geflügelkörper an den Fußgelenken aufnehmenden Schäkels 14 in bekannter Weise beispielsweise in 90°-Drehschritten schwenkend steuerbar sein.

An dem Förderpfad des Hauptförderers 1 ist ein einen Hilfsförderer 17 umfassendes Bearbeitungswerkzeug 16 , beispielsweise zum Abtrennen der Beine von dem Geflügelkörper angeordnet. Die Zeichnung zeigt lediglich diesen Hilfsförderer 17 in vereinfachter Darstellung. Wie angedeutet, kann der Hilfsförderer 17 aus einer angetriebenen Endloskette 18 bestehen, die mit nicht gezeigten, mit dem Geflügelkörper in Wirkverbindung tretenden Mitnehmern ersehen sein kann, zu welchem Zweck die Endloskette 18 mit ihrem Arbeitstrum 19 parallel zu dem Hauptförderer 1 und unter synchroner Geschwindigkeit mit diesem geführt ist. Der Antrieb des Hilfsförderers 17 erfolgt über ein Getriebe 20 , das eingangsseitig ein mit der Laschenkette 4 des Hauptförderers 1 kämmendes, auf geeignete Weise gestellfest gelagertes Zahnrad 21 aufweist. Das Zahnrad 21 ist mit Randausnehmungen 22 versehen, die ein Teilungsmaß aufweisen, das dem halben Abstand der Gelenke 9 entspricht, und ist über eine Übertragungswelle 23 mit der Antriebswelle eines Winkelgetriebes 24 verbunden, auf dessen Abtriebswelle ein die Endloskette 18 treibendes Zahnrad 25 angeordnet ist.

Dank des erfindungsgemäß reduzierten Teilungsmaßes der Laschenkette 4 des Hauptförderers 1 kann der treibende Abgriff für Bearbeitungswerkzeuge mit Hilfsförderer mittels eines Zahnrades erfolgen, das einen vergleichsweise kleinen Durchmesser hat, so daß sich eine universell verwendbare, kompakte Bauweise der Getriebeeinheit verwirklichen läßt. Dabei läßt sich durch Variation der Übersetzung des Winkelgetriebes 24 erreichen, daß das Geschwindigkeitsverhältnis zwischen Hauptförderer 1 und Hilfsförderer 17 in vorbestimmbarer Weise variiert werden kann.

### Bezugszeichenliste

- 1: Hauptförderer
- 2: Umlenkrad
- 3: Getriebemotor
- 4: Laschenkette
- 5: linearer Trumteil
- 6: Kettenglied
- 7: Kettenglied
- 8: Doppellasche
- 9: Gelenk
- 10: Mitnehmer
- 11: Rundbolzen
- 12: Distanzhülse
- 13: Haltemittel
- 14: Schäkel
- 15: Achse
- 16: Bearbeitungswerkzeug
- 17: Hilfsförderer
- 18: Endloskette
- 19: Arbeitstrum
- 20: Getriebe
- 21: Zahnrad
- 22: Randausnehmung
- 23: Übertragungswelle
- 24: Winkelgetriebe
- 25: Zahnrad

## Patentansprüche

1. Einrichtung zur Bearbeitung von Geflügelkörpern zum Zwecke der Herstellung verzehrgerechter Produkte mit einem angetriebenen, Umlenkungen (2) und lineare Trumteile (5) aufweisenden und mit Haltemitteln (13) für die hängende Halterung der Geflügelkörper versehenen Hauptförderer (1) , umfassend eine Laschenkette (4) , deren Kettenglieder (6, 7) jeweils aus Doppellaschen (8) bestehen und jeweils mit benachbarten Kettengliedern (6 oder 7) mittels das Teilungsmaß bestimmenden Gelenken (9) zu einem Endlosförderer verbunden sind, wobei die Haltemittel (13) längs einem Förderpfad bewegt werden, der den Wirkbereich mindestens eines Bearbeitungswerkzeuges (16) mit Hilfsförderer (17) durchläuft, dessen Antrieb mittels eines mit dem Hauptförderer (1) wirkverbundenen Getriebes (20) erfolgt, wobei das Getriebe (20) zum Antrieb des Hilfsförderers (17) ein mit einem linearen Trumteil (5) der Laschenkette (4) des Hauptförderers (1) kämmendes Zahnrad (21) umfaßt, **dadurch gekennzeichnet,** daß jedes Kettenglied (6 und 7) einen zwischen den Gelenken (9) angeordneten und mindestens einer Lasche zugeordneten und das Teilungsmaß halbierenden Mitnehmer (10 bzw. 12) aufweist und daß das Zahnrad (21) mit den Gelenken (9) und den Mitnehmern (10 und 12) in Eingriff steht.

2. Einrichtung nach Anspruch 1 , **dadurch gekennzeichnet,** daß der bzw. die Mitnehmer (10) jeweils einen die beiden Laschen eines Kettengliedes (6 oder 7) verbindenden Rundbolzen (11) umfassen.

3. Einrichtung nach Anspruch 1 oder 2 , **dadurch gekennzeichnet,** daß der bzw. die Rundbolzen (11) mit einer drehbaren Hülse versehen sind.

4. Einrichtung nach einem der Ansprüche 1 bis 3 , **dadurch gekennzeichnet,** daß jedes Haltemittel (13) mittig zwischen den Gelenken (9) jeweils eines Kettengliedes (7) gehaltert ist und daß die an ein solches jeweils unmittelbar anschließenden Kettenglieder (6) mit einem Mitnehmer (10) versehen sind, der ebenfalls mittig zwischen den Gelenken (9) angeordnet ist.

## Claims

1. Equipment for processing poultry carcasses for the purpose of producing products suitable for consumption, with a driven main conveyor (1) which has deflections (2) and linear runs (5) and is provided with holding means (13) for retention of the poultry carcasses in depending manner and which comprises a sprocket chain (4), the chain links (6, 7) of which each consist of double straps (8) and are each connected with adjacent chain links (6, 7) by means of joints (9), which determine the pitch dimension, into an endless conveyor, wherein the holding means (13) are moved along a conveying path which runs through the operative range of at least one processing tool (16) with an auxiliary conveyor (17), the drive of which is effected by means of a gear (20) operatively connected with the main conveyor (1), wherein the gear (20) for the drive of the auxiliary conveyor (17) comprises a gearwheel (21) meshing with a linear run (5) of the sprocket chain (4) of the main conveyor (1), characterised in that each chain link (6 and 7) comprises an entrainer (10 or 12), which is arranged between the joints (9) and associated with at least one strap and which halves the pitch dimension, and that the gearwheel (21) stands in engagement with the joints (9) and the entrainers (10 and 12).

2. Equipment according to claim 1, characterised in that the or each entrainer (10) comprises a round pin (11) connecting the two straps of a chain link (6 or 7).

3. Equipment according to claim 1, characterised in that the or each round pin (11) is provided with a rotatable sleeve.

4. Equipment according to one of claims 1 to 3, characterised in that each holding means (13) is mounted centrally between the joints (9) each time of a chain link (7) and that the chain links (6) directly connected each time to such a link are provided with an entrainer (10), which is similarly arranged centrally between the joints (9).

## Revendications

1. Dispositif pour le traitement de corps de volailles pour. fabriquer des produits de consommation, comportant un convoyeur. principal entraîné (1) comportant des organes de renvoi (2) et des brins de circulation linéaires (5) et équipé de moyens de retenue (13) pour retenir à l'état suspendu les corps des volailles, comprenant une chaîne articulée (4), dont les maillons (6, 7) sont constitués chacun par des attaches doubles (8) et sont reliés respectivement à des maillons voisins (6, 7) au moyen d'articulations (9) déterminant le pas de division, pour former un convoyeur. sans fin, les moyens de retenue (13) étant déplacés le long d'une voie de convoyage, qui traverse la zone d'action d'au moins un outil de traitement (16) comportant un convoyeur auxiliaire (17), dont l'entraînement est réalisé au moyen d'un mécanisme (20) coopérant avec le convoyeur principal (1), et dans lequel le mécanisme (20) utilisé pour l'entraînement du convoyeur auxiliaire (17) comprend un pignon (21), qui engrène avec une partie formant brin linéaire (5) de la chaîne articulée (4) du convoyeur principal (1), caractérisé en ce que chaque maillon (6 et 7) comporte un organe d'entraînement (10 ou 12), qui est disposé entre les articulations (9), est associé à au moins une attache et divise par deux le pas de division, et que le pignon (21) engrène avec les articulations (8) et les organes d'entraînement (10 et 12).

2. Dispositif selon la revendication 1, caractérisé en ce que le ou les organes d'entraînement (10) comprennent chacun des goujons cylindriques (11) qui relient les deux attaches d'un maillon (6 ou 7).

3. Dispositif selon la revendication 1 ou 2, caractérisé en ce que le ou les goujons circulaires (11) comportent une douille rotative.

4. Dispositif selon l'une des revendications 1 à 3, caractérisé en ce que chaque moyen de retenue (13) est retenu en position centrée entre les articulations (9) d'un maillon respectif (7) et que les maillons (6), qui se raccordent directement à un tel maillon, comportent un organe d'entraînement (10), qui est disposé également en position centrée entre les articulations (9).
